# EUROPEAN PATENT APPLICATION

(11) **EP 4 838 829 A1**
(43) Date of publication of application: **11.11.2026**
(21) Application number: 26171096.6
(22) Date of filing: 08.04.2026
(51) Int. Cl.: H04L 5/14, H04L 5/00, H04W 72/0446, H04W 72/0453

(54) **RESOURCE BLOCK DETERMINATION FOR UPLINK TRANSMISSION**

(30) Priority: 17.04.2025 WO PCT/CN2025/089603
(71) Applicant: Nokia Technologies Oy, 02610 Espoo (FI)
(72) Inventor: POCOVI, Guillermo, Aalborg (DK); KASAN, Karim, Massy (FR); NHAN, Nhat-Quang, Reims (FR); SUN, Jing Yuan, Beijing (CN)
(74) Representative: Nokia EPO representatives

(57) **Abstract**

Example embodiments of the present disclosure are directed to resource block (RB) determination for uplink (UL) transmission. A method comprises receiving, from a second apparatus, frequency domain resource allocation (FDRA) information comprising a bitmap indicating at least two non-contiguous resource block groups (RBG) components of resources allocated for an uplink transmission of the first apparatus in uplink slots or symbols, wherein a RBG component comprises a single RBG or a RBG bundle; determining one or more RBs in the at least two non-contiguous RBG components; and determining non-overlapping full duplex (SBFD) resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

## Description

### FIELD

Various example embodiments of the present disclosure generally relate to the field of telecommunication and in particular, to methods, devices, apparatuses and computer readable storage medium for resource block (RB) determination for uplink (UL) transmission.

### BACKGROUND

Subband non-overlapping full duplex (SBFD) is being specified as a new mode of operation in unpaired spectrum where separate set of RBs within a Time division duplex (TDD) carrier are used for UL and downlink (DL) transmission simultaneously. The intention is to allow more UL transmission opportunities compared to the typical DL-heavy TDD configurations used in today's TDD deployments. This brings benefits in terms of UL coverage and UL latency especially in wide area macro networks where many user equipment (UEs) are in power-limited conditions in the UL direction.

### SUMMARY

In a first aspect of the present disclosure, there is provided a first apparatus. The first apparatus comprises at least one processor; and at least one memory storing instructions that, when executed by the at least one processor, cause the first apparatus at least to: receive, from a second apparatus, frequency domain resource allocation (FDRA) information comprising a bitmap indicating at least two non-contiguous resource block groups (RBG) components of resources allocated for an uplink transmission of the first apparatus in uplink slots or symbols, wherein a RBG component comprises a single RBG or a RBG bundle; determine one or more RBs in the at least two non-contiguous RBG components; and determine SBFD resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

In a second aspect of the present disclosure, there is provided a method. The method comprises: receiving, by a first apparatus from a second apparatus, FDRA information comprising a bitmap indicating at least two non-contiguous RBG components of resources allocated for an uplink transmission of the first apparatus in uplink slots or symbols, wherein a RBG component comprises a single RBG or a RBG bundle; determining one or more RBs in the at least two non-contiguous RBG components; and determining SBFD resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

In a third aspect of the present disclosure, there is provided a first apparatus. The first apparatus comprises means for receiving, from a second apparatus, FDRA information comprising a bitmap indicating at least two non-contiguous RBG components of resources allocated for an uplink transmission of the first apparatus in uplink slots or symbols, wherein a RBG component comprises a single RBG or a RBG bundle; means for determining one or more RBs in the at least two non-contiguous RBG components; and means for determining SBFD resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

In a fourth aspect of the present disclosure, there is provided a computer readable medium. The computer readable medium comprises instructions stored thereon for causing an apparatus to perform at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates an example of different arrangements of UL and DL resources for SBFDs operation;
FIG. 3 illustrates an example of repetitions taking place in non-SBFD symbols/slots and in SBFD symbols/slots;
FIG. 4 illustrates a signaling chart of communication according to some example embodiments of the present disclosure;
FIGS. 5A-5D illustrate different examples of determination of the SBFD resources in accordance with some example embodiments of the present disclosure;
FIG. 6 illustrates a flowchart of a method implemented at a first apparatus in accordance with some example embodiments of the present disclosure;
FIG. 7 illustrates a simplified block diagram of a device that is suitable for implementing example embodiments of the present disclosure; and
FIG. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block (RB)," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

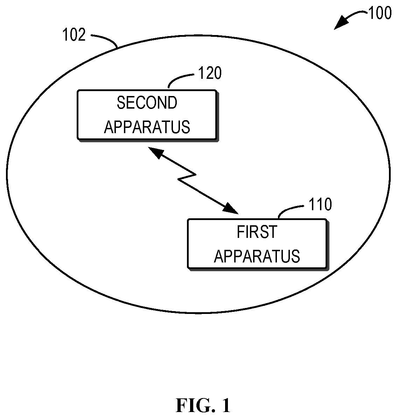

FIG. 1 illustrates an example communication network 100 in which example embodiments of the present disclosure can be implemented. As shown in FIG. 1, the communication network 100 may comprise a first apparatus 110 which may also be, for example, referred to as a terminal device or a UE.

The communication network 100 may further comprise a second apparatus 120, which may be, for example, considered as being a network device or being included in a network device. In some example embodiments, the network device may be discussed as a BS, a gNB, or an eNB.

A serving area provided by the second apparatus 120 is called a cell. The second apparatus 120 may provide one or more cells serving the first apparatus. For example, the first apparatus 110 may communicate with the second apparatus 120 within the cell 102. In some scenarios, the cell 102 may be considered as a cell that is serving the first apparatus 110.

In the following, for the purpose of illustration, some example embodiments are described with the first apparatus 110 operating as a terminal device and the second apparatus 120 operating as a network device. However, in some example embodiments, operations described in connection with a terminal device may be implemented at a network device or other device, and operations described in connection with a network device may be implemented at a terminal device or other device.

In some example embodiments, if the first apparatus 110 is a terminal device and second apparatus 120 is a network device, a link from the second apparatus 120 to first apparatus 110 is referred to as a downlink (DL), while a link from the first apparatus 110 to second apparatus 120 is referred to as an UL. In DL, the second apparatus 120 is a transmitting (TX) apparatus (or a transmitter) and the first apparatus 110 is a receiving (RX) apparatus (or a receiver). In UL, the first apparatus 110 is a TX apparatus (or a transmitter) and the second apparatus 120 is an RX apparatus (or a receiver).

It is to be understood that the number of devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional devices may be located in the cell 102, and one or more additional cells may be deployed in the communication environment 100. It is noted that although illustrated as a network device, the second apparatus 120 may be another device than a network device. Although illustrated as a terminal device, the first apparatus 110 may be another device than a terminal device.

In the following, for the purpose of illustration, some example embodiments are described with the first apparatus 110 operating as a UE and the second apparatus 120 operating as a base station. However, in some example embodiments, operations described in connection with a terminal device may be implemented at a network device or other device, and operations described in connection with a network device may be implemented at a terminal device or other device.

Communications in the communication environment 100 may be implemented according to any proper communication protocol(s), comprising, but not limited to, cellular communication protocols, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Regarding the principles on SBFD operation, it has been agreed that simultaneous transmission and reception (on non-overlapping set of RBs) is assumed at the gNB side, while half-duplex operation is assumed the UE side. UE behavior for handling collision and priorities between UL and DL channels has been specified.

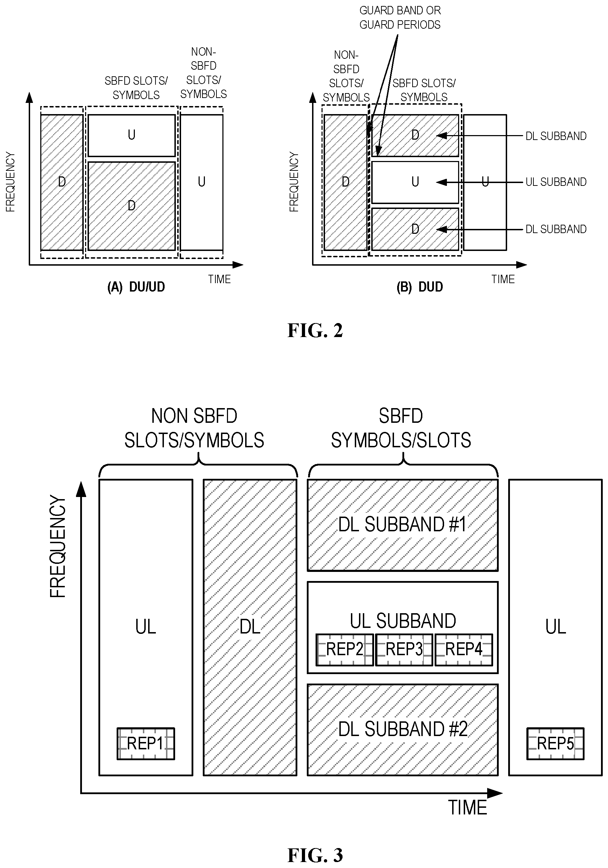

There is only one UL subband, while one or at most two DL subbands within a TDD carrier. These are commonly referred to as DU (or UD) or DUD operation (as shown in FIG. 2), respectively. The SBFD subband may be defined as 1 RB or more consecutive RBs which are used for the same transmission direction (either UL or DL). The UL transmissions may take place within UL subband only, while DL receptions may take place within DL subband(s) only.

It is assumed that both time and frequency locations of subbands for SBFD operation are known to SBFD-aware UEs, while this information is not available for UEs that are not aware of the SBFD. UEs that are not aware of SBFD operation may behave in a similar manner as in today's TDD system.

FIG. 2 illustrates an example arrangement of UL and DL resources for both DU/UD (left) and DUD (right) SBFD operation. SBFD symbols (or slots) refer to those symbols (or slots) where both a UL and one or more DL subbands are simultaneously available, and non-SBFD symbols refer to unidirectional symbols.

Different time-domain sequences were discussed, e.g. DXXXU, XXXXX, or XXXXU where D, U, X refers to downlink, uplink and SBFD slots (1 slot corresponds to 14 OFDM symbols), respectively. One or more RBs may be used as guard band between the UL and DL subbands to facilitate rejection of cross-link interference; Similarly, a guard time or period of one or more OFDM symbols may take place for the transition between different symbol/slot types.

NR supports two main methods for indicating resource blocks for downlink (e.g., physical downlink shared channel (PDSCH)) and uplink (e.g., physical uplink shared channel PUSCH) data channels, namely a bitmap based FDRA Type 0 and a FDRA Type 1 indicated by start RB and number of RB.

In FDRA Type 0, multiple number of consecutive RBs are grouped or bundled into RBG. PDSCH/PUSCH may be allocated only in RBGs. The number of RBs within an RBG varies depending on the specified Bandwidth Part (BWP) size and Configuration. It can take values between 2 and 32 RBs as shown in the Table below. The DCI scheduling PDSCH/PUSCH may contain a bitmap where each 1/0 indicates whether the corresponding RBG is allocated to the user or not.

**Table**

| BWP size | Configuration 1 | Configuration 2 | Configuration 3 |
|---|---|---|---|
| 1-36 | 2 | 4 | 8 |
| 37-72 | 4 | 8 | 16 |
| 73-144 | 8 | 16 | 32 |
| 145-275 | 16 | 16 | 32 |

In FDRA Type 1, the resource is allocated to one or more consecutive RBs. The resource allocation area is defined by two parameters RB_Start (i.e., the start RB) and number of consecutive RBs within a specific BWP. When the resource allocation is specified in downlink control information (DCI), RB_Start and number of consecutive RBs within the BWP are combined into a specific single value called resource indicator value (RIV). The value of RIV is provided in the DCI scheduling PDSCH/PUSCH.

NR allows transmissions/receptions that take over multiple slots. For UL, this includes for example PUSCH repetitions, transport block over multiple slots (TBoMS) and configured grant PUSCH (CG-PUSCH) transmissions in which a PUSCH repeats periodically with certain configured periodicity.

As an example, as shown in FIG. 3, some repetitions take place in UL-only resources (e.g., in non-SBFD symbols/slots) and some others in SBFD resources (e.g., in SBFD symbols/slots). The number of resources in UL subband of SBFD symbols/slots and UL slots are different.

Because the RB allocation associated with the FDRA Type 1 is continuous in frequency domain, some mechanisms have been defined to determine the RB allocation in SBFD symbols for the FDRA Type 1.

For FDRA Type 0, which is a bitmap based FDRA, it is unclear how to define the first RB for PUSCH in non-SBFD symbols/slots and therefore the RB allocation in SBFD symbols/slots for the FDRA Type 1 may still need to be discussed.

In accordance with some example embodiments of the present disclosure, there is provided a solution for resource block (RB) determination for uplink (UL) transmission. In this solution, the second apparatus 120 transmits, to the first apparatus 110, FDRA information comprising a bitmap indicating at least two non-contiguous RBG components of resources allocated for an uplink transmission of the first apparatus in uplink slots or symbols, wherein a RBG component comprises a single RBG or a RBG bundle. Based on the bitmap, the first apparatus 110 may determine one or more RBs in the at least two non-contiguous RBG components and determine SBFD resources corresponding to the at least two non-contiguous RBG components. The SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

Example embodiments of the present disclosure will be described in detail below with reference to the accompanying drawings.

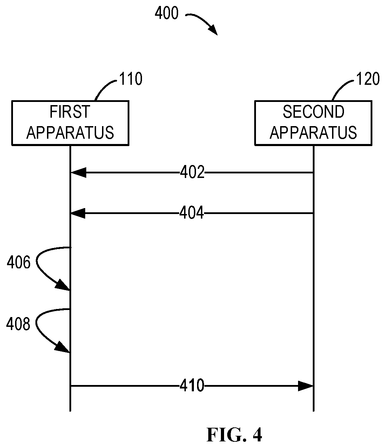

Reference is now made to FIG. 4, which shows a signaling chart 400 of communication according to some example embodiments of the present disclosure. As shown in FIG. 4, the signaling chart 400 involves a first apparatus 110 and a second apparatus 120. For the purpose of discussion, reference is made to FIG. 1 to describe the signaling chart 400.

As shown in FIG. 4, the second apparatus 120 may determine an FDRA for uplink transmission of the first apparatus 110 and transmit (402) FDRA information to the first apparatus 110. The FDRA information herein refers to a type 0 FDRA and the resource allocation may be indicated by a bitmap, which indicates at least two non-contiguous RBG components of resources allocated for the uplink transmission of the first apparatus in uplink (UL) slots or symbols. For example, the second apparatus 120 may transmit the FDRA information via DCI or any other proper signaling.

The UL slot or symbols used herein may refer to non-SBFD slots or symbols. A RBG component used herein may refer to a single RBG or an RBG bundle.

Furthermore, the second apparatus 120 may also provide (404) a configuration of SBFD resources, and potentially an offset or other configuration parameters to be used for determining a PUSCH allocation in SBFD resources, e.g., denoted as ${RB}_{offset}^{SBFD}$*.* The configuration of SBFD resources may comprise an indication of the first RB of the SBFD UL subband and the length/size of the SBFD UL subband, for example.

Upon receiving the FDRA information, the first apparatus 110 may determine (406) one or more RBs in the at least two non-contiguous RBG components. The one or more RBs used herein may comprise a single start RB in the at least two non-contiguous RBG components, respective start RBs in the at least two non-contiguous RBG components, or all RBs included in the at least two non-contiguous RBG components.

Then the first apparatus 110 may determine (408) SBFD resources corresponding to the at least two non-contiguous RBG components. It is noted that the at least two non-contiguous RBG components may be given (via the bitmap) in non-SBFD resources (and thus directly useable for some non-SBFD UL slots/symbols), and the first apparatus 110 needs to derive the SBFD resources based on the indicated non-SBFD resources, so that the first apparatus 110 will become aware on which frequency domain resources the UE can use for uplink communication during SBFD slots/symbols.

In some example embodiments, the first apparatus 110 may determine the first allocated RB in the SBFD uplink subband, e.g., based on Equation (1) list as below: ${RB}_{start}^{SBFD} = {RB}_{start}^{UL SB} + \left({RB}_{start}+{RB}_{offset}^{SBFD}\right) {modN}_{UL SB}^{size}$ (1) where ${RB}_{start}^{UL SB}$ is the first RB in the SBFD uplink subband, *RBₛₜₐᵣₜ* is the start RB in the at least two non-contiguous RBG components or in a RBG component of the at least two non-contiguous RBG components, ${N}_{UL SB}^{size}$ is the number of RBs in the SBFD uplink subband and ${RB}_{offset}^{SBFD}$ is a configurable parameter provided by the second apparatus, wherein it is 0 if not provided.

That is, the SBFD resources corresponding to the at least two non-contiguous RBG components may be based at least on ${RB}_{start}^{UL SB} , {N}_{UL SB}^{size}$ and *RBₛₜₐᵣₜ,* i.e., based at least on the first RB in the SBFD uplink subband, the number of RBs in the SBFD uplink subband and the start RB in the at least two non-contiguous RBG components or in a RBG component of the at least two non-contiguous RBG components.

As an example, the first apparatus 110 may determine a single start RB in the at least two non-contiguous RBG components as a starting RB, e.g., denoted as *RBₛₜₐᵣₜ,* in non-SBFD resources. That is, the first RB across all allocated RBGs, i.e., the RB with the lowest frequency index among allocated RBGs, may be determined as the starting RB in the non-SBFD resources.

In this situation, based on the Equation (1), the first apparatus 110 may determine a starting RB in SBFD resources ${RB}_{start}^{SBFD}$ based at least on the single start RB in the at least two non-contiguous RBG components (determined as *RBₛₜₐᵣₜ*)*,* the first RB in the SBFD UL subband ${RB}_{start}^{UL SB}$ and the number of RBs in the SBFD UL subband ${N}_{UL SB}^{size}$.

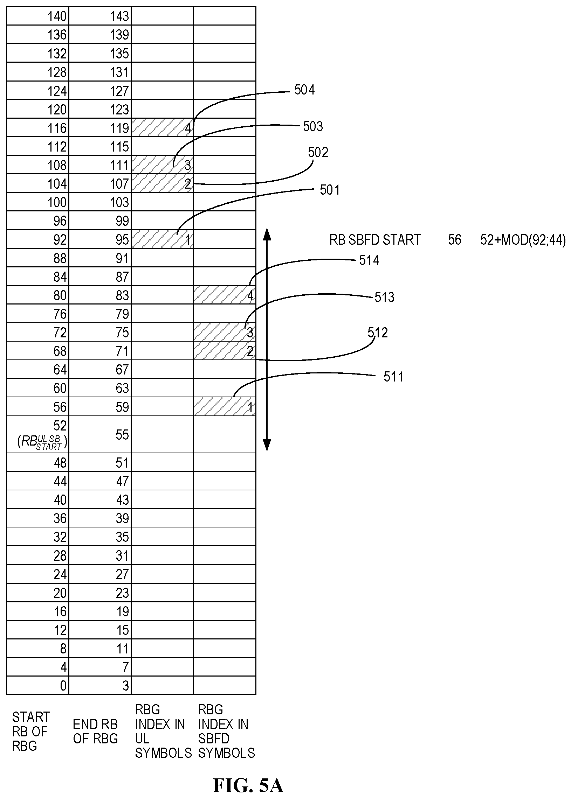

FIG. 5A shows an example of determination of SBFD resources. With reference to FIG. 5A, the process for determining the SBFD resources using the single start RB in the at least two non-contiguous RBG components will be described in detail.

As shown in FIG. 5A, RBGs 501-504 are allocated in UL symbols (i.e., non-SBFD symbols). In this case, the RB start in non-SBFD symbols (which may also be referred to as the start RB of the at least two non-contiguous RBG components) is the first RB of the RBG with lowest frequency index, i.e. 92.

The first apparatus 110 may determine the RB start in SBFD symbols (which may also be referred to as the first allocated RB in the SBFD uplink subband) using Equation (1), i.e. 52+92MOD(44) = 56 assuming ${RB}_{offset}^{SBFD} = 0$*.* That is, the first RB of the uplink subband of the SBFD slot/symbol is 52. The SBFD uplink subband ends at RB 95 in this example. Thus, the length (=the number of RBs) in the SBFD uplink subband (on the SBFD time slot) is 44 RBs, as shown with the double headed arrow in the Figure. The first apparatus 110 may then determine an offset between the first allocated RB in the SBFD uplink subband and the start RB of the at least two non-contiguous RBG components, i.e., 56-92= -36 RBs (or 9 RBGs).

The first apparatus 110 may determine the SBFD resources corresponding to the at least two non-contiguous RBG components in the SBFD symbols (i.e., the allocated RBs (or RBGs) in SBFD symbols) based on the offset, e.g., by applying an offset to the at least two non-contiguous RBG components (i.e., the allocated RB (or RBG) in non-SBFD symbols), or by changing the starting point of the entire allocation based on the determined RB start in SBFD symbols ${RB}_{start}^{SBFD}$*.*

It is to be understood that the length of the allocation in non-SBFD resources may also be considered by the first apparatus 110 for determining the SBFD resources. The length of the allocation in SBFD resources may be the same as the length of the allocation in non-SBFD resources.

As shown in FIG. 5A, the determined SBFD resources in the SBFD symbols are RBGs 511-514.

As another example, the first apparatus 110 may determine respective start RBs in the at least two non-contiguous RBG components as starting RBs, e.g., each denoted as *RBₛₜₐᵣₜ,* in non-SBFD resources.

As an option, the RBG component herein may refer to an RBG bundle, e.g., a bundle of contiguous/back-to-back RBGs. For each bundle of RBGs, the first apparatus 110 may determine a starting RB in non-SBFD resources as the RB with lowest frequency index within the RBG bundle.

In this situation, based on the Equation (1), the first apparatus 110 may determine a starting RB of a RGB bundle or RBG in SBFD resources (denoted to as ${RB}_{start}^{SBFD}$) based at least on a start RB of corresponding RGB bundle or RBG in at least two non-contiguous RBG bundles or RBGs (may be denoted to as *RBₛₜₐᵣₜ*), the first RB in the SBFD UL subband ${RB}_{start}^{UL SB}$ and the number of RBs in the SBFD UL subband ${N}_{UL SB}^{size}$.

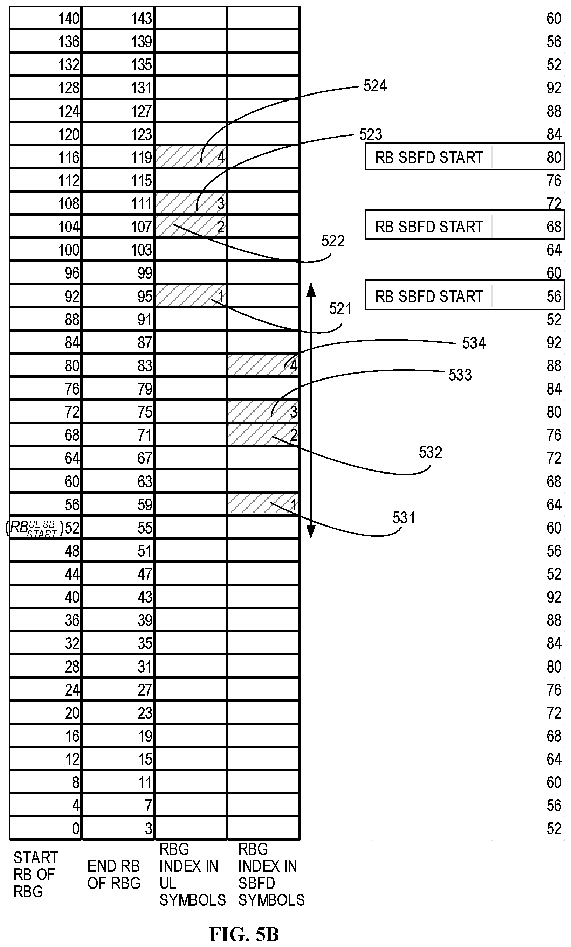

FIG. 5B shows an example of determination of SBFD resources. With reference to FIG. 5B, the process for determining the SBFD resources using respective start RBs in the at least two non-contiguous RBG bundles/RBGs will be described in detail.

As shown in FIG. 5B, RBGs 521-524 are allocated in UL symbols (i.e., non-SBFD symbols). RGBs 522 and 523 are considered as an RBG bundle. The allocated resources comprise the RBG 521, the RBG bundle (522+523) and the RBG 524 and these three RBG components are non-contiguous in frequency domain.

In this case, the RB start in SBFD symbols may be determined independently for each RBG bundle and each RBG. The RB start of this RBG bundle (522+523) in non-SBFD symbols is the first RB of this RBG bundle with lowest frequency index, i.e., 104.

The first apparatus 110 may determine the RB start in SBFD symbols (which may also be referred to as the first allocated RB in the SBFD uplink subband) using Equation (1), i.e. 52+104MOD(44) = 68 assuming ${RB}_{offset}^{SBFD} = 0$. Because RGBs 522 and 523 belongs to a RBG bundle, they may share the same ${RB}_{start}^{SBFD} = 68$ in this scenario. Then the RBG bundle in SBFD symbols corresponding to the RBG bundle in non-SBFD symbols may be RBG bundle 532 and 533.

For each RBG allocated in non-SBFD symbols, the corresponding RB start in SBFD symbols may be determined in the same way.

It is to be understood that the length of the allocation in non-SBFD resources may also be considered by the first apparatus 110 for determining the SBFD resources. The length of the allocation in SBFD resources may be the same as the length of the allocation in non-SBFD resources.

As shown in FIG. 5B, the determined SBFD resources in the SBFD symbols are RBGs 531-534.

As another option, the RBG component herein may refer to an RBG. For each RBG, the first apparatus 110 may determine a starting RB in non-SBFD resources as the RB with lowest frequency index within this RBG.

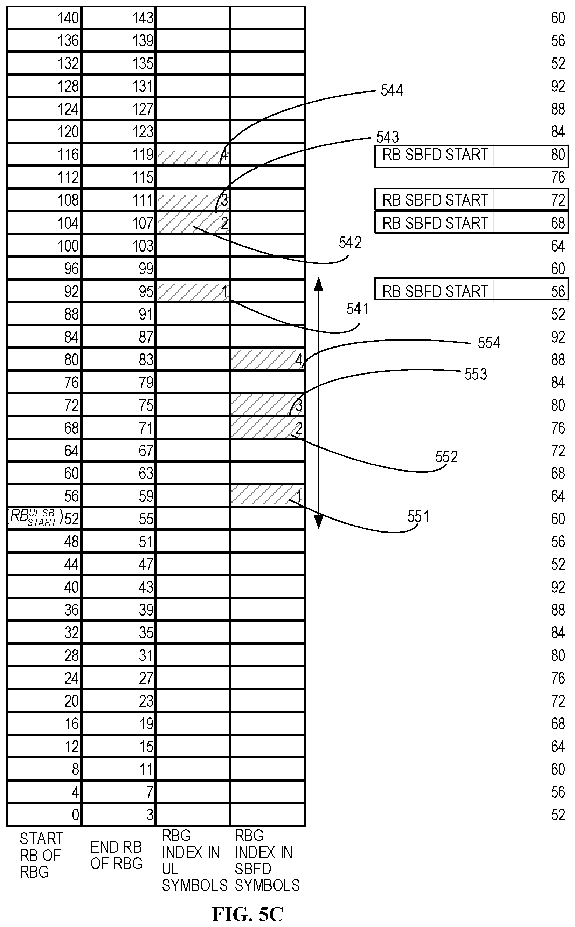

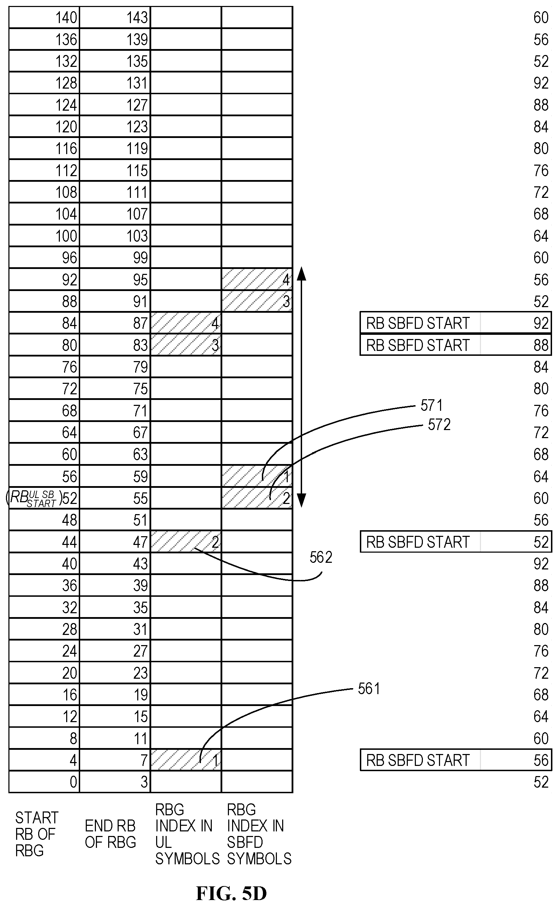

FIGS. 5C and 5D show example processes of determination of SBFD resources. With reference to FIGS. 5C and 5D, the process for determining the SBFD resources using respective start RBs at least two non-contiguous RBGs will be described in detail.

As shown in FIG. 5C, RBGs 541-544 are allocated in UL symbols (i.e., non-SBFD symbols).

In this case, the RB start in SBFD symbols may be determined independently for each RBG. The RB start of the RBG 541 in non-SBFD symbols is the first RB of this RBG 541 with lowest frequency index, i.e., 92.

The first apparatus 110 may determine the RB start in SBFD symbols (which may also be referred to as the first allocated RB in the SBFD uplink subband) using Equation (1), i.e. 52+92MOD(44) = 56 assuming ${RB}_{offset}^{SBFD} = 0$*.* Then the RBG in SBFD symbols corresponding to the RBG 541 in non-SBFD symbols may be RBG 551.

For each of the other RBGs (e.g., 542-544) allocated in non-SBFD symbols, the corresponding RB start in SBFD symbols may be determined in the same way, to reach RBGs 552-554, respectively.

It is to be understood that the length of the allocation in non-SBFD resources may also be considered by the first apparatus 110 for determining the SBFD resources. The length of the allocation in SBFD resources may be the same as the length of the allocation in non-SBFD resources.

As shown in FIG. 5C, the determined SBFD resources in the SBFD symbols are RBGs 551-554.

It is also possible that allocated RBs in SBFD symbols do not follow the same order/pattern as in the non-SBFD symbol. As shown in FIG. 5D, RBGs 561-564 are the at least two non-consecutive RGB components allocated in UL symbols (i.e., non-SBFD symbols).

The RB start of the RBG 561 in non-SBFD symbols is the first RB of this RBG 561 with lowest frequency index, i.e., 4. The first apparatus 110 may determine the RB start in SBFD symbols (which may also be referred to as the first allocated RB in the SBFD uplink subband) using Equation (1), i.e. 52+4MOD(44) = 56 assuming ${RB}_{offset}^{SBFD} = 0$*.* Then the RBG in SBFD symbols corresponding to the RBG 561 in non-SBFD symbols may be RBG 571.

The RB start of the RBG 562 in non-SBFD symbols is the first RB of this RBG 562 with lowest frequency index, i.e., 44. The first apparatus 110 may determine the RB start in SBFD symbols (which may also be referred to as the first allocated RB in the SBFD uplink subband) using Equation (1), i.e. 52+4MOD(44) = 52 assuming ${RB}_{offset}^{SBFD} = 0$*.* Then the RBG in SBFD symbols corresponding to the RBG 562 in non-SBFD symbols may be RBG 572.

For each other RBG (e.g., 563 and 564) allocated in non-SBFD symbols, the corresponding RB start in SBFD symbols may be determined in the same way.

It is to be understood that the length of the allocation in non-SBFD resources may also be considered by the first apparatus 110 for determining the SBFD resources. The length of the allocation in SBFD resources may be the same as the length of the allocation in non-SBFD resources.

As shown in FIG. 5D, the determined SBFD resources in the SBFD symbols are RBGs 571-574.

Referring back to FIG. 4, upon determining the SBFD resources, the first apparatus 110 may transmit (410), to the second apparatus 120, the uplink transmission using the determined SBFD resources on the SBFD uplink subband.

In some embodiments, for the case where SBFD resources are determined using the single start RB in the at least two non-contiguous RBG components, the non-contiguous RBG and shifting part may be focused. The shifting may be done by the following examples.

As an example, using a sub-bitmap together with ${RB}_{start}^{SBFD}$ may be used. The first apparatus 110 may determine a subset of the indicated bitmap (sub-bitmap) associated to the first allocated RBG to the last allocated RBG in non-SBFD slot (i.e. starting from the ${RB}_{start}^{non - SBFD}$*.* Or, in other words, the subset starts from the first to the last value "1" in the indicated bitmap). The first apparatus 110 may then apply the sub-bitmap to RBGs in SBFD slot, starting from the ${RB}_{start}^{SBFD}$*.*

As another example, a non-contiguous resources of length L' and ${RB}_{start}^{SBFD}$ may be used. The first apparatus 110 may determine a non-contiguous resources of length L' in RB starting from the first RB of the allocated RBG to the last RB of the last allocated RBG. Then the first apparatus 110 may determine that the allocated resources in length L' starting from ${RB}_{start}^{SBFD}$ in SBFD slot is the same as the allocated resources in length L' starting from ${RB}_{start}^{non - SBFD}$ in non-SBFD slot.

As yet example, using a ${RB}_{start}^{non - SBFD} , {RB}_{end}^{non - SBFD}$ and ${RB}_{start}^{SBFD}$ may be used. The first apparatus 110 may determine ${RB}_{end}^{non - SBFD}$ location in non-SBFD slot, which is the last RB of the last allocated RBG. The first apparatus 110 may determine that the allocated resources in SBFD slot starting from ${RB}_{start}^{SBFD}$ is the same as the allocated resource in non-SBFD slot from ${RB}_{start}^{non - SBFD}$ to ${RB}_{end}^{non - SBFD}$.

Some examples of impacts on the specification associated with the proposed solution are listed below.

As an example, for the case where SBFD resources is determined using respective start RB in each RBG in the at least two non-contiguous RBG components,

For an SBFD-aware UE, if the UE is scheduled with PUSCH transmission occasions across SBFD symbols and UL symbols in different slots or if the UE is scheduled with PUSCH transmission occasions across SBFD symbols and UL symbol within a slot for PUSCH repetition type B, the resource allocation of type 0 for PUSCH transmission occasions in UL symbols is provided by the bitmap, while for each allocated RBG for PUSCH transmission occasions in SBFD symbols,
- RBG size is the same as RBG size for PUSCH transmission occasions in UL symbols.
- The starting resource block ${RB}_{start}^{SBFD}$ for the RBG is defined by: ${RB}_{start}^{SBFD} = {RB}_{start}^{UL SB} + \left({RB}_{start}+{RB}_{offset}^{SBFD}\right) {modN}_{UL SB}^{size}$
where
- ${RB}_{start}^{UL SB}$ is the starting PRB index of UL usable PRBs with reference to the start of UL active BWP,
- *RBₛₜₐᵣₜ* is the starting PRB index of the RBG.
- ${N}_{UL SB}^{size}$ is the number of PRBs of UL usable PRBs,
- For Type 1 PUSCH transmissions with a configured grant, ${RB}_{offset}^{SBFD}$ is provided in *rrc-ConfiguredUplinkGrant* in *ConfiguredGrantConfig.* For Type 2 PUSCH transmissions with a configured grant and PUSCH transmissions scheduled by DCI format 0_1, 0_2 or 0_3, ${RB}_{offset}^{SBFD}$ is provided per UL BWP in *PUSCH-Config.* If not provided, ${RB}_{offset}^{SBFD} = 0$.
The UE does not expect that the PRBs for PUSCH transmissions in SBFD symbols to be overlapped with PRBs outside UL usable PRBs.

In this way, a mechanism can be achieved for determining the RB start of UL slot and the corresponding SBFD resources when FDRA type 0 is used.

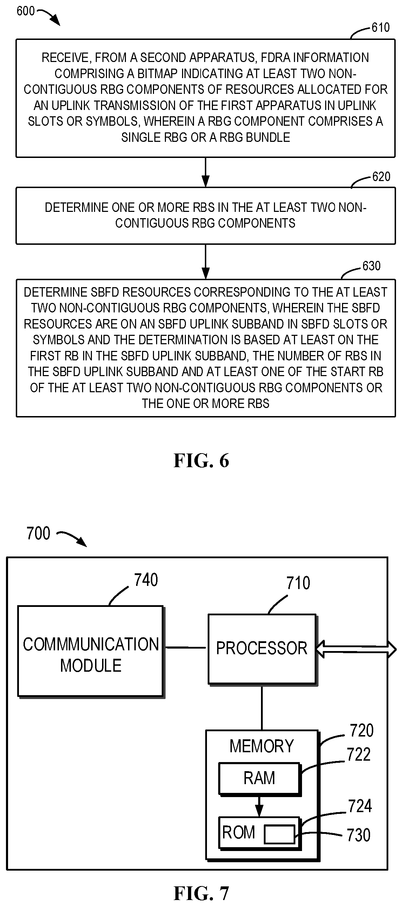

FIG. 6 shows a flowchart of an example method 600 implemented at a first apparatus in accordance with some example embodiments of the present disclosure. For the purpose of discussion, the method 600 will be described from the perspective of the first apparatus 110 in FIG. 1.

At block 610, the first apparatus 110 receives, from a second apparatus, FDRA information comprising a bitmap indicating at least two non-contiguous RBG components of resources allocated for an uplink transmission of the first apparatus in uplink slots or symbols, wherein a RBG component comprises a single RBG or a RBG bundle.

At block 620, the first apparatus 110 determines one or more RBs in the at least two non-contiguous RBG components.

At block 630, the first apparatus 110 determines SBFD resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

In some example embodiments, the one or more RBs comprise at least one of the following: a single start RB in the at least two non-contiguous RBG components, respective start RBs in the at least two non-contiguous RBG components, or all RBs included in the at least two non-contiguous RBG components.

In some example embodiments, the method 600 further comprises: determining the first RB in the SBFD uplink subband, the number of RBs in the SBFD uplink subband and a length of the at least two non-contiguous RBG components; determining a first allocated RB in the SBFD uplink subband corresponding to the start RB in the at least two non-contiguous RBG components based on the start RB in the at least two non-contiguous RBG components, the first RB in the SBFD uplink subband and the number of RBs in the SBFD uplink subband; determining an offset between the first allocated RB in the SBFD uplink subband and the start RB of the at least two non-contiguous RBG components; and determining the SBFD resources based on the start RB of the at least two non-contiguous RBG components, the offset and the length of the at least two non-contiguous RBG components.

In some example embodiments, the start RB in the at least two non-contiguous RBG components is a start RB of a RBG which has the lowest frequency index in RBGs of the at least two non-contiguous RBG components.

In some example embodiments, the method 600 further comprises: determining the first RB in the SBFD uplink subband, the number of RBs in the SBFD uplink subband and respective lengths of the at least two non-contiguous RBG components; determining respective first allocated RBs in the SBFD uplink subband corresponding to the start RBs of the at least two non-contiguous RBG components based on the respective start RBs of the at least two non-contiguous RBG components, the first RB in the SBFD uplink subband and the number of RBs in the SBFD uplink subband; and determining the SBFD resources based on the respective first allocated RBs in the SBFD uplink subband and the respective lengths of the at least two non-contiguous RBG components.

In some example embodiments, the method 600 further comprises: determining the first RB in the SBFD uplink subband and the number of RBs in the SBFD uplink subband; determining allocated RBs in the SBFD uplink subband corresponding to all RBs comprised in the at least two non-contiguous RBG components based on the RBs comprised in the at least two non-contiguous RBG components, the first RB in the SBFD uplink subband and the number of RBs in the SBFD uplink subband; and determining the SBFD resources based on the allocated RBs in the SBFD uplink subband.

In some example embodiments, the first allocated RB ( ${RB}_{start}^{SBFD}$) in the SBFD uplink subband is determined as follows: ${RB}_{start}^{SBFD} = {RB}_{start}^{UL SB} + \left({RB}_{start}+{RB}_{offset}^{SBFD}\right) {modN}_{UL SB}^{size}$ , where ${RB}_{start}^{UL SB}$ is the first RB in the SBFD uplink subband, *RBₛₜₐᵣₜ* is the start RB in the at least two non-contiguous RBG components or in a RBG component of the at least two non-contiguous RBG components, ${N}_{UL SB}^{size}$ is the number of RBs in the SBFD uplink subband, and ${RB}_{offset}^{SBFD}$ is a configurable parameter provided by the second apparatus, wherein it is 0 if not provided.

In some example embodiments, the FDRA information is for FDRA Type 0.

In some example embodiments, the method 600 further comprises: transmitting, to the second apparatus, the uplink transmission using the determined SBFD resources on the SBFD uplink subband.

In some example embodiments, the first apparatus comprises a terminal device and the second apparatus comprises a network device.

In some example embodiments, a first apparatus capable of performing any of the method 600 (for example, the first apparatus 110 in FIG. 1) may comprise means for performing the respective operations of the method 600. The means may be implemented in any suitable form. For example, the means may be implemented in a circuitry or software module. The first apparatus may be implemented as or included in the first apparatus 110 in FIG. 1.

FIG. 7 is a simplified block diagram of a device 700 that is suitable for implementing example embodiments of the present disclosure. The device 700 may be provided to implement a communication device, for example, the first apparatus 110 or the second apparatus 120 as shown in FIG. 1. As shown, the device 700 includes one or more processors 710, one or more memories 720 coupled to the processor 710, and one or more communication modules 740 coupled to the processor 710.

The communication module 740 is for bidirectional communications. The communication module 740 has one or more communication interfaces to facilitate communication with one or more other modules or devices. The communication interfaces may represent any interface that is necessary for communication with other network elements. In some example embodiments, the communication module 740 may include at least one antenna.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 722 and other volatile memories that will not last in the power-down duration.

A computer program 730 includes computer executable instructions that are executed by the associated processor 710. The instructions of the program 730 may include instructions for performing operations/acts of some example embodiments of the present disclosure. The program 730 may be stored in the memory, e.g., the ROM 724. The processor 710 may perform any suitable actions and processing by loading the program 730 into the RAM 722.

The example embodiments of the present disclosure may be implemented by means of the program 730 so that the device 700 may perform any process of the disclosure as discussed with reference to FIG. 2 to FIG. 6. The example embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

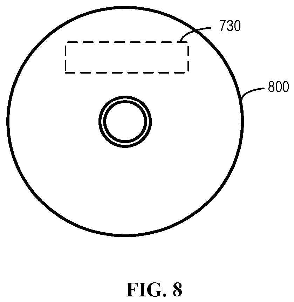

FIG. 8 shows an example of the computer readable medium 800 which may be in form of CD, DVD or other optical storage disk. The computer readable medium 800 has the program 730 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
at least one processor; and
at least one memory storing instructions that, when executed by the at least one processor, cause the first apparatus at least to:
receive, from a second apparatus, frequency domain resource allocation, FDRA, information comprising a bitmap indicating at least two non-contiguous resource block groups, RBG, components of resources allocated for an uplink transmission of the first apparatus in uplink slots or symbols, wherein a RBG component comprises a single RBG or a RBG bundle;
determine one or more resource block, RBs, in the at least two non-contiguous RBG components; and
determine subband non-overlapping full duplex, SBFD, resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

2. The first apparatus of claim 1, wherein the one or more RBs comprise at least one of the following:
a single start RB in the at least two non-contiguous RBG components,
respective start RBs in the at least two non-contiguous RBG components, or
all RBs included in the at least two non-contiguous RBG components.

3. The first apparatus of claim 1, wherein the one or more RBs comprise a single start RB in the at least two non-contiguous RBG components, and wherein the first apparatus is caused to:
determine the first RB in the SBFD uplink subband, the number of RBs in the SBFD uplink subband and a length of the at least two non-contiguous RBG components;
determine a first allocated RB in the SBFD uplink subband corresponding to the start RB in the at least two non-contiguous RBG components based on the start RB in the at least two non-contiguous RBG components, the first RB in the SBFD uplink subband and the number of RBs in the SBFD uplink subband;
determine an offset between the first allocated RB in the SBFD uplink subband and the start RB of the at least two non-contiguous RBG components; and
determine the SBFD resources based on the start RB of the at least two non-contiguous RBG components, the offset and the length of the at least two non-contiguous RBG components.

4. The first apparatus of claim 3, wherein the start RB in the at least two non-contiguous RBG components is a start RB of a RBG which has the lowest frequency index in RBGs of the at least two non-contiguous RBG components.

5. The first apparatus of claim 1, wherein the one or more RBs comprise respective start RBs of the at least two non-contiguous RBG components, and wherein the first apparatus is caused to:
determine the first RB in the SBFD uplink subband, the number of RBs in the SBFD uplink subband and respective lengths of the at least two non-contiguous RBG components;
determine respective first allocated RBs in the SBFD uplink subband corresponding to the start RBs of the at least two non-contiguous RBG components based on the respective start RBs of the at least two non-contiguous RBG components, the first RB in the SBFD uplink subband and the number of RBs in the SBFD uplink subband; and
determine the SBFD resources based on the respective first allocated RBs in the SBFD uplink subband and the respective lengths of the at least two non-contiguous RBG components.

6. The first apparatus of claim 1, wherein the one or more RBs comprise all RBs included in the at least two non-contiguous RBG components, and wherein the first apparatus is caused to:
determine the first RB in the SBFD uplink subband and the number of RBs in the SBFD uplink subband;
determine allocated RBs in the SBFD uplink subband corresponding to all RBs comprised in the at least two non-contiguous RBG components based on the RBs comprised in the at least two non-contiguous RBG components, the first RB in the SBFD uplink subband and the number of RBs in the SBFD uplink subband; and
determine the SBFD resources based on the allocated RBs in the SBFD uplink subband.

7. The first apparatus of any of claims 1-6, wherein the first allocated RB ( ${RB}_{start}^{SBFD}$) in the SBFD uplink subband is determined as follows: where${RB}_{start}^{SBFD} = {RB}_{start}^{UL SB} + \left({RB}_{start}+{RB}_{offset}^{SBFD}\right) {modN}_{UL B}^{size}$
${RB}_{start}^{UL SB}$ is the first RB in the SBFD uplink subband,
*RBₛₜₐᵣₜ* is the start RB in the at least two non-contiguous RBG components or in a RBG component of the at least two non-contiguous RBG components,
${N}_{UL SB}^{size}$ is the number of RBs in the SBFD uplink subband, and
${RB}_{offset}^{SBFD}$ is a configurable parameter provided by the second apparatus, wherein it is 0 if not provided.

8. The first apparatus of any of claims 1-7, wherein the FDRA information is for FDRA Type 0.

9. The first apparatus of any of claims 1-8, wherein the first apparatus is caused to:
transmit, to the second apparatus, the uplink transmission using the determined SBFD resources on the SBFD uplink subband.

10. The first apparatus of any of claims 1-9, wherein the first apparatus comprises a terminal device and the second apparatus comprises a network device.

11. A method comprising:
receiving, from a second apparatus, frequency domain resource allocation, FDRA, information comprising a bitmap indicating at least two non-contiguous resource block groups, RBG, components of resources allocated for an uplink transmission of the first apparatus in uplink slots or symbols, wherein a RBG component comprises a single RBG or a RBG bundle;
determining one or more resource block, RBs, in the at least two non-contiguous RBG components; and
determining subband non-overlapping full duplex, SBFD, resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

12. A first apparatus comprising:
means for receiving, from a second apparatus, frequency domain resource allocation, FDRA, information comprising a bitmap indicating at least two non-contiguous resource block groups, RBG, components of resources allocated for an uplink transmission of the first apparatus in uplink slots or symbols, wherein a RBG component comprises a single RBG or a RBG bundle;
means for determining one or more resource block, RBs, in the at least two non-contiguous RBG components; and
means for determining subband non-overlapping full duplex, SBFD, resources corresponding to the at least two non-contiguous RBG components, wherein the SBFD resources are on an SBFD uplink subband in SBFD slots or symbols and the determination is based at least on the first RB in the SBFD uplink subband, the number of RBs in the SBFD uplink subband and at least one of the start RB of the at least two non-contiguous RBG components or the one or more RBs.

13. A computer readable medium comprising instructions stored thereon for causing an apparatus at least to perform the method of claim 11.
